# EUROPEAN PATENT APPLICATION

(11) **EP 4 209 359 A1**
(43) Date of publication of application: **12.07.2023**
(21) Application number: 21864019.1
(22) Date of filing: 02.08.2021
(51) Int. Cl.: B60C 1/00, C08C 19/00, C08C 19/22, C08C 19/24, C08G 79/00

(54) **COMPLEX POLYMER, RUBBER COMPOSITION, METHOD FOR MANUFACTURING RUBBER COMPOSITION, AND RUBBER PRODUCT**

(30) Priority: 04.09.2020 JP 2020149343
(71) Applicant: BRIDGESTONE CORPORATION, Chuo-ku Tokyo 104-8340 (JP)
(72) Inventor: KOSAI, Tomoyuki, Tokyo 104-8340 (JP)
(74) Representative: Marks & Clerk LLP
(86) International application number: PCT/JP2021/028671
(87) International publication number: WO 2022/049961

(57) **Abstract**

An object of the present disclosure is to provide a polymer which is recyclable and capable of performing as equally well as a new product. Another object of the present disclosure is to provide a rubber composition containing said polymer, a method for manufacturing said rubber composition, and a rubber product containing said rubber composition. To achieve the objects, the present disclosure provides a complex polymer, comprising: a polymer main chain containing a conjugated diene unit and/or an olefin unit; and a functional group bonded to the polymer main chain, wherein: the functional group contains nitrogen atom and/or phosphorus atom therein and is complexed with a metal ion of an element of group 7-10 in the Periodic Table; and the bond dissociation energy for dissociation of the metal ion and the functional group is 200 kJ/mol or more.

## Description

### TECHNICAL FIELD

The present invention relates to a complex polymer, a rubber composition, a method for manufacturing the rubber composition, and a rubber product.

### BACKGROUND ART

Conventionally, most of vulcanized rubber products which have been used, such as used tires, were disposed as waste without being recycled. However, now it is an urgent task to recycle such waste of vulcanized rubber as used tires in terms of addressing environmental problems, facilitating resource-saving, and so on.
As a method for regenerating a vulcanized rubber, there is, for example, a conventionally known method for regenerating a vulcanized rubber by applying heat and shearing force to the vulcanized rubber by using a twin-screw extruder.
Further, PTL 1 proposes a technique of devulcanizing a vulcanized rubber and regenerating the rubber as an unvulcanized rubber.

### CITATION LIST

### Patent Literature

PTL 1: JP2005-023225 A

### SUMMARY OF THE INVENTION

### (Technical Problem)

However, in the prior art, a crosslinked product of polymer, such as a vulcanized rubber, inevitably deteriorates as a result of regeneration because the crosslinked product is regenerated by being treated under harsh conditions. A rubber product using a regenerated rubber has, for example, a problem that the rubber product performs poorly in physical properties such as breaking strength, as compared with a rubber product not using a regenerated rubber. Accordingly, there is still room for improvement in recycling a crosslinked product of polymer, such as a vulcanized rubber, whereby a further study thereon is being requested.

In view of this, an object of the present disclosure is to provide a polymer (such as a rubber) being recyclable, capable of performing as equally well as a new product, and thus solving the prior art problems described above.

Further, another object of the present disclosure is to provide a rubber composition containing the polymer, a method for manufacturing the rubber composition, and a rubber product containing the rubber composition.

### (Solution to Problem)

The inventor of the present disclosure discovered, as a result of a keen study for solving the problems described above, that a specific complex polymer is recyclable and performs as equally well as a new product after being regenerated, thereby completing the present disclosure. Specifically, the primary features of the present disclosure for achieving the aforementioned objects are as follows.

A complex polymer of the present disclosure, comprises: a polymer main chain containing a conjugated diene unit and/or an olefin unit; and a functional group bonded to the polymer main chain, wherein: the functional group contains nitrogen atom and/or phosphorus atom therein and is complexed with a metal ion of an element of group 7-10 in the Periodic Table; and the bond dissociation energy for dissociation of the metal ion and the functional group is 200 kJ/mol or more.

A rubber composition according to an embodiment of the present disclosure is a rubber composition containing the complex polymer described above, wherein a content of sulfur in the rubber composition is equal to or less than 0.3 parts by mass with respect to 100 parts by mass of a rubber component.

Further, a rubber composition according to another embodiment of the present disclosure is a rubber composition containing the complex polymer, wherein a content of peroxide in the rubber composition is equal to or less than 0.3 parts by mass with respect to 100 parts by mass of a rubber component.

A method for manufacturing a rubber composition according to an embodiment of the present disclosure is a method for manufacturing a rubber composition containing the complex polymer, the method comprising: at a first stage of mixing and kneading, mixing and kneading a compound containing a polymer main chain and a compound containing a functional group, thereby forming a functionalized polymer in which the functional group is bonded to the polymer main chain; and, at a second stage of mixing and kneading or thereafter, adding a salt of metal to the functionalized polymer, mixing and kneading the functionalized polymer and the salt of metal, thereby causing the functionalized polymer to be complexed with the metal and thus forming a complex polymer.

Further, a method for manufacturing a rubber composition according to another embodiment of the present disclosure is a method for manufacturing a rubber composition containing the complex polymer, the method comprising: preparing the complex polymer in advance; and blending the complex polymer thus prepared in advance, with other components of the rubber composition, and mixing and kneading the mixture.

A rubber product of the present disclosure characteristically contains the rubber composition described above.

### (Advantageous Effect)

According to the present disclosure, it is possible to provide a polymer which is recyclable and capable of performing as equally well as a new product. Further, according to the present disclosure, it is possible to provide a rubber composition containing the polymer, a method for manufacturing the rubber composition, and a rubber product containing the rubber composition.

### DETAILED DESCRIPTION

Hereinafter, a complex polymer, a rubber composition, a method for manufacturing the rubber composition, and a rubber product of the present disclosure will be demonstratively described in detail based on embodiments thereof.

### < Complex polymer >

A complex polymer of the present disclosure has: a polymer main chain containing a conjugated diene unit and/or an olefin unit; and a functional group bonded to the polymer main chain, wherein: the functional group contains nitrogen atom and/or phosphorus atom therein and is complexed with a metal ion of an element of group 7-10 in the Periodic Table; and the bond dissociation energy for dissociation of the metal ion and the functional group is 200 kJ/mol or more.

The complex polymer of the present disclosure, having a polymer main chain and a functional group, wherein the functional group is complexed with a metal ion of an element of group 7-10 in the Periodic Table such that the bond dissociation energy for dissociation of the metal ion and the functional group is 200 kJ/mol or more, has high durability due to the highly strong crosslinking of the polymer main chain.

On the other hand, the bond between the metal ion and the functional group, which is not such a sulfur crosslinking bond as in vulcanized rubber in general, can be easily cleaved, for example, by heating, so that the rubber is fluidized for remolding. Since the bond between the metal ion and the functional group can be easily cleaved, the complex polymer need not be exposed to harsh conditions for cleavage of the bond. The functionalized polymer containing the polymer main chain and the functional group, (re)generated as a result of dissociation of the metal ion and the functional group, maintains original functionality of the polymer main chain intact because the complex polymer need not be exposed to harsh conditions for cleavage of the bond, as described above. Accordingly, a complex polymer, regenerated by causing the recovered functionalized polymer to be complexed with a metal ion, can continue to perform as equally well as a new complex polymer.

The complex polymer of the present disclosure is therefore recyclable and performs as equally well as a new complex polymer after being regenerated. Further, according to the present disclosure, it is possible to provide a novel polymer having a new crosslinking structure in place of sulfur crosslinking.

### (Polymer main chain)

The complex polymer of the present disclosure includes a polymer main chain containing a conjugated diene unit and/or an olefin unit. That is, the polymer main chain contains either a conjugated diene unit or an olefin unit or contains both conjugated diene unit and olefin unit. The complex polymer has at least one polymer main chain. In a case where the complex polymer has one polymer main chain, the complex polymer forms a crosslinking structure by way of a metal ion within a molecule thereof. In a case where the complex polymer has two or more polymer main chains, the complex polymer forms a crosslinking structure by way of a metal ion not only within a molecule thereof but also intermolecularly (between the two or more polymer main chains thereof). The complex polymer has a plurality of the functional groups therein for formation of a crosslinking structure. In this regard, the plurality of the functional groups may be bonded to either a single polymer main chain or a plurality of polymer main chains, respectively. The plurality of the functional groups may be of either the same type or different types.

The conjugated diene unit represents a monomer unit derived from a conjugated diene compound. The conjugated diene compound as a monomer preferably has 4 to 8 carbon atoms. Specific examples of the conjugated diene compound include 1,3-butadiene, isoprene, 1,3-pentadiene, 2,3-dimethyl-1,3-butadiene, and the like. The conjugated diene compound as a monomer preferably includes 1,3-butadiene and/or isoprene in terms of being satisfactorily elastomeric.

A content of the conjugated diene unit in the polymer main chain, which is not particularly restricted and may be 0 mol %, is preferably ≥ 0.1 mol %, more preferably > 1 mol %, and may be 100 mol %. A complex polymer having excellent elastomeric properties can be obtained when the aforementioned content is ≥ 1 mol %.

The olefin unit represents a monomer unit derived from an olefin compound. The olefin compound as a monomer preferably has 2 to 10 carbon atoms. Specific examples of the olefin compound include: α-olefin such as ethylene, propylene, 1-pentene, 1-hexene, 1-heptene, 1-octene, and the like; a heteroatom-substituted alkene compound such as vinyl pivalate, 1-phenylthio ethene, N-vinylpyrrolidone; and the like. A content of the olefin unit in the polymer main chain, which is not particularly restricted and may be 0 mol %, is preferably ≥ 1 mol % and may be 100 mol %.

The polymer main chain may further include a unit derived from another monomer which can be copolymerized with the conjugated diene compound and/or the olefin compound described above. Examples of a unit derived from another monomer include an aromatic vinyl unit, and the like. A content of the unit derived from another monomer in the polymer main chain, which is not particularly restricted and may be 0 mol %, is preferably ≥ 1 mol % and ≤ 50 mol % in one embodiment.

The aromatic vinyl unit represents a monomer unit derived from an aromatic vinyl compound. The aromatic vinyl compound represents an aromatic compound substituted with at least vinyl group. The aromatic vinyl compound as a monomer preferably has 8 to 10 carbon atoms. Specific examples of the aromatic vinyl compound include styrene, α-methylstyrene, 2-methylstyrene, 3-methylstyrene, 4-methylstyrene, 2,4-dimethyl styrene, 2-ethylstyrene, 3-ethylstyrene, 4-ethylstyrene, and the like.

### (Functional group)

The complex polymer of the present disclosure includes a functional group bonded to the polymer main chain. The functional group contains nitrogen atom and/or phosphorus atom therein and is complexed with a metal ion of an element of group 7-10 in the Periodic Table. The functional group and the metal ion are strongly bonded due to the functional group containing nitrogen atom and/or phosphorus atom therein and being complexed with a metal ion of an element of group 7-10 in the Periodic Table, whereby a crosslinking as strong as sulfur crosslinking is successfully formed. Preferable examples of the functional group containing nitrogen include a group having a nitrogen-containing heterocyclic ring such as 4,5-dihydropyridazine ring, pyridine ring, pyrimidine ring, triazine ring, tetrazine ring, or the like. Examples of the functional group containing phosphorus include the groups obtained by replacing respective nitrogen atoms of the nitrogen-containing heterocyclic rings of the functional groups containing nitrogen described above, with phosphorus atoms.

In the present disclosure, it is preferable that the functional group contains no sulfur atom. In a case where the functional group contains no sulfur atom, crosslinking between the polymer main chains by sulfur atoms can be prevented from occurring and therefore recyclability of the product improves.

In the complex polymer of the present disclosure, the bond dissociation energy for dissociation of the metal ion and the functional group is ≥ 200 kJ/mol and preferably ≥ 250 kJ/mol and ≤ 500 kJ/mol. A crosslinked structure having high strength equivalent to that of sulfur crosslinking can be formed and thus satisfactorily high durability of the complex polymer is ensured when the aforementioned bond dissociation energy is ≥ 200 kJ/mol. The durability of the complex polymer further improves when the bond dissociation energy is ≥ 250 kJ/mol. The bond between the metal ion and the functional group can be more easily cleaved and thus the complex polymer can be more easily recycled than otherwise when the bond dissociation energy is ≤ 500 kJ/mol.

In the present disclosure, the bond dissociation energy for dissociation of the metal ion and the functional group represents a value measured in vacuum at the structure optimizing level of M06/6-31G(d, p)//B3PW91-D3/6-31G(d, p) or M06/6-31G(d, p). It is assumed that the metal ion and the functional group form ionic aggregates. Gaussian09 or GRRM14 can be used for calculation of the bond dissociation energy.

The metal ion and the functional group are bonded to each other preferably by coordinate bond in the complex polymer of the present disclosure. The bonding of the metal ion and the functional group is satisfactorily reversible or cleavable when they are bonded by coordinate bond. Further, in a case where the metal ion and the functional group are bonded to each other by coordinate bond in the complex polymer, the metal ion and the functional group can easily form satisfactorily strong bond and the complex polymer can be easily fluidized by heating, whereby regeneration work can be done more easily and thus recyclability of the complex polymer further improves than otherwise.

The functional group is preferably derived from a compound containing a triazine ring or a tetrazine ring in the complex polymer of the present disclosure. A compound containing a triazine ring or a tetrazine ring, which is reactive with the polymer main chain, easily forms a functionalized polymer due to reactiveness thereof with the polymer main chain. Further, a nitrogen-containing functional group derived from a compound containing a triazine ring or a tetrazine ring is easily complexed with a metal ion of an element of group 7-10 in the Periodic Table, thereby successfully forming a crosslinked structure having high strength equivalent to that of sulfur crosslinking.

In the present disclosure, in a case where the functional group is derived from a compound containing a triazine ring or a tetrazine ring, it is preferable that a pyridyl/pyrimidinyl group is bonded to the triazine/tetrazine ring of the compound. It is more preferable in this regard that two pyridyl/pyrimidinyl groups are bonded to the triazine/tetrazine ring. In a case where a pyridyl/pyrimidinyl group is bonded to the triazine/tetrazine ring, the functional group is more easily complexed with a metal ion of an element of group 7-10 in the Periodic Table, whereby the relevant bond dissociation energy is likely to be high and thus a crosslinked structure having higher strength, than otherwise, can be formed. Further, in a case where two pyridyl/pyrimidinyl groups are bonded to the triazine/tetrazine ring, the functional group is even more easily complexed with a metal ion of an element of group 7-10 in the Periodic Table, whereby the relevant bond dissociation energy is more likely to be high and thus a crosslinked structure having even higher strength, than otherwise, can be formed.

The pyridyl group, which may be any of 2-pyridyl, 3-pyridyl, and 4-pyridyl, is preferably 2-pyridyl group. The pyrimidinyl group may be any of 2-pyrimidinyl, 4-pyrimidinyl, and 5-pyrimidinyl group.

The functional group is preferably derived from a compound represented by general formula (1) shown below.

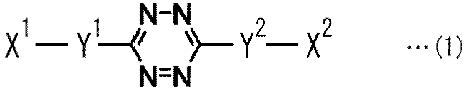

In the general formula (1), each of X¹ and X² independently represents a pyridyl/pyrimidinyl group, and each of Y¹ and Y² independently represents a single bond or a divalent hydrocarbon group.

The compound represented by the general formula (1) easily causes a Diels-Alder reaction between itself and a polymer main chain containing a conjugated diene unit and/or an olefin unit, thereby easily forming a functionalized polymer. Further, in a case where the functional group is derived from a compound represented by the general formula (1), the functional group is particularly easily complexed with a metal ion of an element of group 7-10 in the Periodic Table, whereby the relevant bond dissociation energy is even more likely to be high and thus a crosslinked structure having particularly high strength can be formed.

In the general formula (1), each of X¹ and X² independently represents a pyridyl/pyrimidinyl group. Each of X¹ and X² is preferably a pyridyl group in terms of making the synthesis process easy. The pyridyl group, which may be any of 2-pyridyl, 3-pyridyl, and 4-pyridyl, is preferably 2-pyridyl group. The pyrimidinyl group may be any of 2-pyrimidinyl, 4-pyrimidinyl, and 5-pyrimidinyl group.

In the general formula (1), each of Y¹ and Y² independently represents a single bond or a divalent hydrocarbon group. Examples of the divalent hydrocarbon group include alkylene, alkenylene, arylene groups, and the like. Specifically, examples of the alkylene group include methylene, ethylene, trimethylene, tetramethylene groups, and the like. Examples of the alkenylene group include vinylene, propenylene, butenylene groups, and the like. Examples of the arylene group include phenylene, tolylene, naphthylene groups, and the like. Each of Y¹ and Y² is preferably a single bond in terms of making the synthesis process easy (i.e., it is preferable that each of X¹ and X² is directly bonded to the tetrazine ring).

In the present disclosure, it is preferable that each of X¹ and X² is a pyridyl group and each of Y¹ and Y² is a single bond in the general formula (1). Not only the compound of the general formula (1) is easily available but also the functional group is particularly easily complexed with a metal ion of an element of group 7-10 in the Periodic Table, whereby the relevant bond dissociation energy is even more likely to be high and thus a crosslinked structure having particularly high strength can be formed, in this case.

Examples of the compound represented by the general formula (1) include 3,6-di(2-pyridyl)-1,2,4,5-tetrazine, 3,6-di(3-pyridyl)-1,2,4,5-tetrazine, 3,6-di(4-pyridyl)-1,2,4,5-tetrazine, 3,6-di(2-pyridylmethyl)-1,2,4,5-tetrazine, 3,6-di(2-pyridylethyl)-1,2,4,5-tetrazine, 3-(2-pyridylmethyl)-6-(2-pyridylethyl)-1,2,4,5-tetrazine, 3,6-di(2-pyrimidinyl)-1,2,4,5-tetrazine, 3,6-di(4-pyrimidinyl)-1,2,4,5-tetrazine, 3,6-di(5-pyrimidinyl)-1,2,4,5-tetrazine, and the like. 3,6-di(2-pyridyl)-1,2,4,5-tetrazine is preferable among those examples.

In the complex polymer of the present disclosure, the functional group is bonded to the polymer main chain by an amount of the functional group preferably in the range of 0.1 to 10 mol %, more preferably in the range of 0.3 to 8 mol %, even more preferably in the range of 0.4 to 5 mol %, and particularly preferably in the range of 0.5 to 3 mol %, with respect to the monomer units of the polymer main chain. In a case where the functional group is bonded to the polymer main chain by an amount of the functional group, of ≥ 0.1 mol %, with respect to the monomer units of the polymer main chain, it is possible to form a crosslinked structure having high strength equivalent to that of sulfur crosslinking and thus obtain a complex polymer having satisfactorily high durability. In a case where the functional group is bonded to the polymer main chain by an amount of the functional group, of ≤ 10 mol %, with respect to the monomer units of the polymer main chain, a complex polymer which is satisfactorily elastomeric can be easily obtained.

### (Metal ion)

In the complex polymer of the present disclosure, a metal ion to be complexed with the functional group is a metal ion of an element of group 7-10 in the Periodic Table and preferably a metal ion of an element of group 8 in the Periodic Table.

Specifically, examples of the element of group 7 include manganese, rhenium, and the like.

Examples of the element of group 8 include iron, ruthenium, osmium, and the like. Examples of the element of group 9 include cobalt, rhodium, iridium, and the like. Examples of the element of group 10 include nickel, palladium, platinum, and the like. A metal ion of an element of group 7-10 in the Periodic Table is likely to form a strong bond with the functional group. Further, in a case where the metal ion is a metal ion of an element of group 8 in the Periodic Table, the bond between the metal ion and the functional group is likely to be stronger than otherwise and thus formation of a crosslinked structure having high strength equivalent to that of sulfur crosslinking is ensured.

The valence number of a metal ion of the element of group 7-10 in the Periodic Table is not particularly restricted and may be set at any valence number which the element can take.

Iron ion is particularly preferable as the metal ion described above. Iron ion is likely to form a particularly strong bond with the functional group containing nitrogen atom and/or phosphorus atom, thereby making it possible to form a crosslinked structure having higher strength than otherwise. The valence number of iron ion is preferably divalent (Fe²⁺) or trivalent (Fe³⁺).

In the complex polymer of the present disclosure, the metal ion is complexed with the functional group preferably by addition of a relevant metal salt to a polymer main chain having the functional group bonded thereto. A complex polymer can be easily obtained and thus formation of a crosslinked structure having high strength equivalent to that of sulfur crosslinking is easy in this case. The form of a metal salt to be added is not particularly restricted and may be a metal salt hydrate, for example. The metal salt is added by an amount of the metal salt preferably in the range of 1 to 30 parts by mass, more preferably in the range of 1 to 15 parts by mass, even more preferably in the range of 1 to 10 parts by mass, and particularly preferably in the range of 1 to 5 parts by mass, with respect to 100 parts by mass of the polymer main chain.

Examples of the metal salt include a metal halide, a metal sulfate, a metal nitrate, and the like. A metal halide is preferable among those examples. A metal halide is easy to handle, thereby making it easier to form a crosslinked structure having high strength equivalent to that of sulfur crosslinking, than otherwise.

Examples of the metal halide include a metal fluoride, a metal chloride, a metal bromide, a metal iodide, and the like. A metal chloride is preferable among those examples. A metal chloride is easy to handle, thereby making it even easier to form a crosslinked structure having high strength equivalent to that of sulfur crosslinking.

Specific examples of the metal salt include FeCl₂, FeCl₂ · 4H₂O, FeCl₃, FeCl₃ · 6H₂O, and the like. Either a single type or combination of two or more types of those examples may be used as the metal salt.

### (Method for manufacturing complex polymer)

The complex polymer of the present disclosure can be synthesized by, for example: causing a compound having a functional group containing nitrogen and/or phosphorus to react with a polymer chain, thereby forming a functionalized polymer in which the nitrogen and/or phosphorus-containing functional group is bonded to the polymer chain; and causing the functionalized polymer to be complexed with a metal ion of an element of group 7-10 in the Periodic Table. In the present disclosure, such a compound containing a triazine ring or a tetrazine ring as described above is preferable and a compound represented by the general formula (1) is more preferable as the compound having the nitrogen-containing functional group. In a rection between the polymer chain and the compound having the nitrogen and/or phosphorus-containing functional group, it is preferable that the reaction conditions such as temperature, pressure, reaction time, and the like are optionally selected in accordance with types and reactivities of the polymer chain and/or a compound having a functional group containing nitrogen and/or phosphorus for use in the reaction. Further, in a reaction for causing the functionalized polymer to be complexed with a metal ion, it is preferable that the reaction conditions such as temperature, pressure, reaction time, and the like are optionally selected in accordance with types and reactivities of the functionalized polymer and the metal ion for use in the reaction.

A reaction scheme of functionalizing a polymer main chain and causing a resulting functionalized polymer to be complexed with a metal ion when 3,6-di(2-pyridyl)-1,2,4,5-tetrazine is used as a compound having a nitrogen-containing functional group and ferrous chloride (FeCh) is used as a raw material of the metal ion, is shown below, as an example of the method for manufacturing the complex polymer.

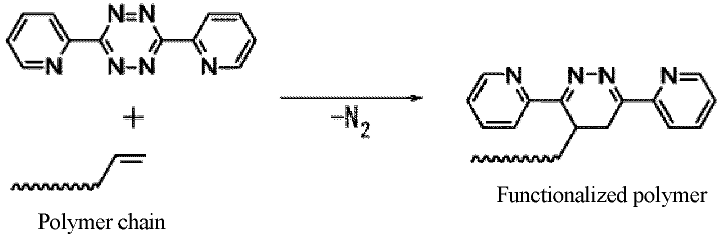

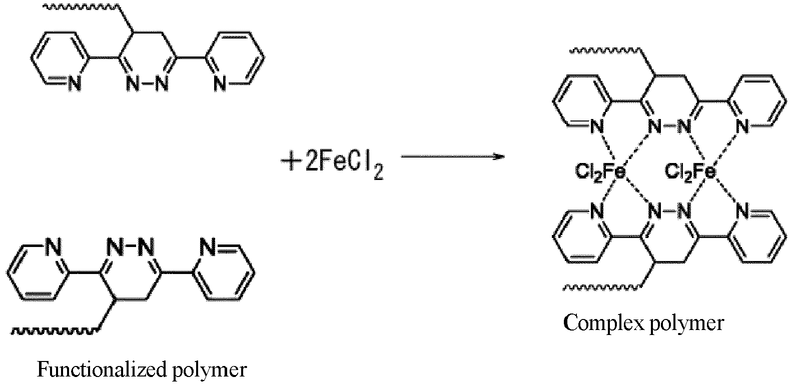

As is shown in the upper part of the reaction scheme, one embodiment of the present disclosure causes a Diels-Alder reaction between a compound having a nitrogen-containing functional group and a polymer main chain containing a conjugated diene unit and/or an olefin unit, thereby generating a functionalized polymer. Although nitrogen is released in the Diels-Alder reaction in the present embodiment, any other optional reaction may be utilized to carry out the functionalizing reaction of the polymer main chain.

Further, as is shown in the lower part of the reaction scheme, the one embodiment of the present disclosure causes the functionalized polymer to be complexed with ferrous chloride, thereby generating a complex polymer. Although the reaction scheme shows a reaction in which nitrogen atoms in the tetrazine residue and a nitrogen atom in the pyridyl group bonded to the tetrazine residue are complexed with iron ions, the complex polymer of the present disclosure may take any of a variety of complex forms.

The complex polymer may further include another functional group which is not complexed with a metal ion of an element of group 7-10 in the Periodic Table. Type of such another functional group as described above is not particularly restricted and may be optionally selected in accordance with physical properties or the like of a desired complex polymer.

The complex polymer of the present disclosure may be prepared in advance by preliminarily synthesizing it as described above. Alternatively, the complex polymer may be synthesized *in situ* in the manufacturing process of a rubber composition as disclosed, for example, in the method for manufacturing a rubber composition discussed below.

### < Rubber composition >

A rubber composition of the present disclosure contains the complex polymer described above. The rubber composition of the present disclosure is recyclable (for example, remoldable by hot pressing) and capable of performing as equally well as a new product after being recycled because it contains the above-described complex polymer which is recyclable and capable of performing as equally well as a new product after being recycled.

A rubber composition of one embodiment of the present disclosure contains the complex polymer described above as a rubber component. The rubber composition of the present disclosure may further contain a rubber component other than the above-described complex polymer and examples of such another rubber component include natural rubber (NR), synthetic diene rubber, non-(conjugated) diene rubber, and the like. Examples of the synthetic diene rubber include synthetic isoprene rubber (IR), styrene-butadiene rubber (SBR), butadiene rubber (BR), styrene-isoprene rubber (SIR), chloroprene rubber (CR), ethylene-butadiene copolymer, ethylene-styrene-butadiene copolymer, and the like. Examples of the non-diene rubber include silicone rubber, fluororubber, urethane rubber, and the like.

A content of the complex polymer in the rubber component of the rubber composition is preferably ≥ 10 mass % and may be 100 mass %.

The complex polymer is regarded as a resin component when the polymer main chain thereof contains olefin units and no diene unit therein. Any rubber can be used as a rubber component of the rubber composition in this case and examples of the rubber component which can be used include natural rubber (NR), synthetic diene rubber, non-(conjugated) diene rubber, and the like described above. Further, in a case where the complex polymer is employed as a resin composition, a thermoplastic resin or the like can be used as another resin component. Examples of the thermoplastic resin include polyolefin resin, polyamide resin, polyester resin (such as PET), and the like.

In addition to the complex polymer and the rubber component described above, compounding agents generally employed in the rubber industry, such as filler (carbon black, silica, etc.,), softening agent, stearic acid, antioxidant, silane coupling agent, and the like may be optionally selected and added to the rubber composition of the present disclosure unless the addition thereof adversely affects the objects of the present disclosure. Commercially available products can be suitably used as those compounding agents. It is preferable that the rubber composition of the present disclosure contains only a small amount of/no sulfur or peroxides therein. In the present disclosure, however, the rubber composition of the present disclosure may contain or rather preferably contains a vulcanization accelerator even in a case where the rubber composition contains only a small amount of/no sulfur therein. A sulfenamide vulcanization accelerator is preferable as the vulcanization accelerator to be contained in the rubber composition.

In one embodiment of the rubber composition of the present disclosure, a content of sulfur in the rubber composition is preferably ≤ 0.3 parts by mass and may be 0 parts by mass with respect to 100 parts by mass of the rubber component. Such a rubber composition having a low sulfur content as described above includes very few sulfur-derived crosslinking structures such as S-S bond, C-S bond therein (once a sulfur-derived crosslinking structure is formed, it can hardly be cleaved) and thus is easily recycled.

In another embodiment of the rubber composition of the present disclosure, a content of peroxide in the rubber composition is preferably ≤ 0.3 parts by mass and may be 0 parts by mass with respect to 100 parts by mass of the rubber component. Such a rubber composition having a low peroxide content as described above includes very few peroxide-derived crosslinking structures such as C-C bond therein (once a peroxide-derived crosslinking structure is formed, it can hardly be cleaved) and thus is easily recycled.

In yet another embodiment of the rubber composition of the present disclosure, a content of sulfur in the rubber composition is preferably ≤ 0.3 parts by mass and a content of peroxide in the rubber composition is preferably ≤ 0.3 parts by mass with respect to 100 parts by mass of the rubber component. Such a rubber composition having a low sulfur content and a low peroxide content as described above includes very few sulfur-derived crosslinking structures and/or peroxide-derived crosslinking structures such as S-S bond, C-S bond, C-C bond therein and thus is easily recycled.

### < Method for manufacturing rubber composition >

A method for manufacturing a rubber composition of the present disclosure is a method for manufacturing a rubber composition containing the complex polymer described above. It should be noted that the complex polymer may be generated *in situ* in the manufacturing process of the rubber composition.

In a method for manufacturing a rubber composition according to one embodiment of the present disclosure, a first stage of a mixing and kneading process thereof includes mixing and kneading a compound containing a polymer main chain and a compound containing a functional group, thereby forming a functionalized polymer as the polymer main chain having the functional group bonded thereto. Further, in the method for manufacturing a rubber composition according to the one embodiment of the present disclosure, a second stage or a stage after the second stage of the mixing and kneading process thereof includes adding a metal salt to the functionalized polymer and mixing and kneading the metal salt and the functionalized polymer, thereby causing the functionalized polymer to be complexed with a metal ion and thus forming a complex polymer. The method for manufacturing a rubber composition described above, allowing preparation of a complex polymer during a manufacturing (mixing and kneading) process of a rubber composition, is advantageous in terms of productivity.

The functionalized polymer can be complexed with a metal ion by addition of a metal salt to the functionalized polymer either at the second stage or any stage after the second stage of the mixing and kneading process. Any optional compounding agents as described above may be blended simultaneously at the first/second stage or a stage after the second stage of the mixing and kneading process. The compound having a triazine ring or a tetrazine ring as described above is preferable and the compound represented by the general formula (1) is more preferable as the compound containing the functional group.

The method for manufacturing a rubber composition of the present disclosure is not restricted to the method described above. For example, the method for manufacturing a rubber composition according to another embodiment of the present disclosure includes forming the complex polymer in advance and adding the complex polymer thus preliminarily formed, to other components, in the mixing and kneading process. The manufacturing method of a rubber composition of said another embodiment also allows simplified production of a rubber composition containing the complex polymer described above and is advantageous in terms of productivity.

Further, the method for manufacturing a rubber composition according to yet another embodiment of the present disclosure includes: preliminarily preparing a functionalized polymer in which a functional group is bonded to a polymer main chain; mixing and kneading the functionalized polymer and an optionally selected compounding agent at a first stage of the mixing and kneading process; and adding a metal salt thereto and mixing and kneading the mixture at a second stage/a stage after the second stage of the mixing and kneading process, thereby causing the functionalized polymer to be complexed with a metal ion and thus forming a complex polymer. The manufacturing method of a rubber composition of said yet another embodiment also allows simplified production of a rubber composition containing the complex polymer described above and is advantageous in terms of productivity.

### < Rubber product >

A rubber product of the present disclosure is characterized in that the rubber product contains the rubber composition described above. The rubber product of the present disclosure, containing the rubber composition including the recyclable complex polymer described above therein, is recyclable and capable of performing as equally well as a new product after being recycled.

The rubber product of the present disclosure is preferably a tire. A tire, even after it has been worn, generally retains satisfactory durability at rubber portions thereof. Therefore, the tire can be fully recycled by regenerating the rubber portions thereof. Examples of portions of a tire, to which the rubber composition described above applicable, include a tread, a sidewall, a side reinforcing rubber, a bead filler, and the like, without being limited thereto.

The tire can be manufactured by, for example: sequentially laminating members generally for use in tire production such as a carcass layer, a belt layer, a tread layer made of the rubber composition on a tire building drum; removing the drum, to obtain a green tire; and subjecting the green tire to heating as desired.

The rubber composition of the present disclosure is applicable to not only a tire but also a rubber damper, seismic isolation rubber, a belt (a conveyor belt), a rubber crawler, hoses of various types, and the like, for example.

### EXAMPLES

The present disclosure will be described further in detail by Examples hereinafter. The present disclosure is not restricted by any means by these Examples.

### < Method for manufacturing functionalized polymer A >

A functionalized polymer sample (functionalized polymer A) was prepared by:
dissolving 50 g of "TUFDENE^{™}2000R" (styrene-butadiene rubber (SBR) as a polymer main chain containing conjugated diene units), manufactured by Asahi Kasei Corporation, in 600 mL of THF in a glass bottle;
adding 2.4 g (10 mmol) of 3,6-di(2-pyridyl)-1,2,4,5-tetrazine, manufactured by Tokyo Chemical Industry Co., Ltd., to the glass bottle and heating and refluxing the reaction mixture for 3 hours; and
subjecting to a resulting solution to vacuum drying at 60 °C for 7 hours, thereby obtaining 50 g of functionalized polymer A.

A content of the functional group which can be complexed with a metal ion is 1.2 mol % with respect to the monomer units of the polymer main chain in the functionalized polymer A thus obtained.

### < Method for manufacturing functionalized polymer B >

A functionalized polymer sample (functionalized polymer B) was prepared by:
dissolving 50 g of "TUFDENE^{™}2000R" (styrene-butadiene rubber (SBR) as a polymer main chain containing conjugated diene units), manufactured by Asahi Kasei Corporation, in 600 mL of THF in a glass bottle;
adding 1.8 g (7.5 mmol) of 3,6-di(2-pyridyl)-1,2,4,5-tetrazine, manufactured by Tokyo Chemical Industry Co., Ltd. and 0.44 g (0.25 mmol) of 4-phenyl-1,2,4-triazoline-3,5-dione, manufactured by Tokyo Chemical Industry Co., Ltd., to the glass bottle and heating and refluxing the reaction mixture for 3 hours; and
subjecting to a resulting solution to vacuum drying at 60 °C for 7 hours, thereby obtaining 50 g of functionalized polymer B.

A content of the functional group which can be complexed with a metal ion is 0.9 mol % with respect to the monomer units of the polymer main chain in the functionalized polymer B thus obtained.

### < Manufacturing a rubber composition >

Rubber composition samples were prepared according to the blend formulations shown in Table 1 by using a conventional Banbury mixer. A first stage and a second stage of a mixing and kneading process were carried out in this order such that iron (II) chloride tetrahydrate was added to the mixture at the second stage of the mixing and kneading process, to form a complex polymer, in each of the Examples. The first stage of the mixing and kneading process was carried out at 140 °C for 3 minutes and the second stage of the mixing and kneading process was carried out at 80 °C for 1 minute. Tensile strength (Tb) and elongation at break (Eb) were measured by the methods described below, respectively, for each of the rubber composition samples thus obtained.

The bond dissociation energy for dissociation of the iron ion and the nitrogen-containing functional group is 249.7 kJ/mol for the complex polymer in each of the rubber composition samples prepared in Examples 1 to 4.

### < Measurement of Tb and Eb >

Tensile strength (Tb (MPa)) and elongation at break (Eb (%)) were measured for each of the rubber composition samples, by preparing No. 7 dumbbell test pieces from the rubber composition sample and subjecting the test pieces to tensile tests at the room temperature (23 °C) and high temperature (100 °C) according to JIS-K6251.

### < Recycling of rubber composition >

Each of the rubber composition samples was placed in a mold and heated at 160 °C for 30 minutes, thereby being remolded. Tb and Eb were measured for the rubber composition sample thus remolded, by the respective methods described above.

The remolding process were carried out totally three times and the recycling properties were evaluated for the rubber composition sample. The results are shown in Table 1. In Table 1, "Failure" indicates that the rubber composition sample was never successfully remolded in the three remolding attempts and "Three or more times" indicates that the rubber composition sample was successfully remolded at each of the three remolding attempts.

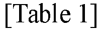

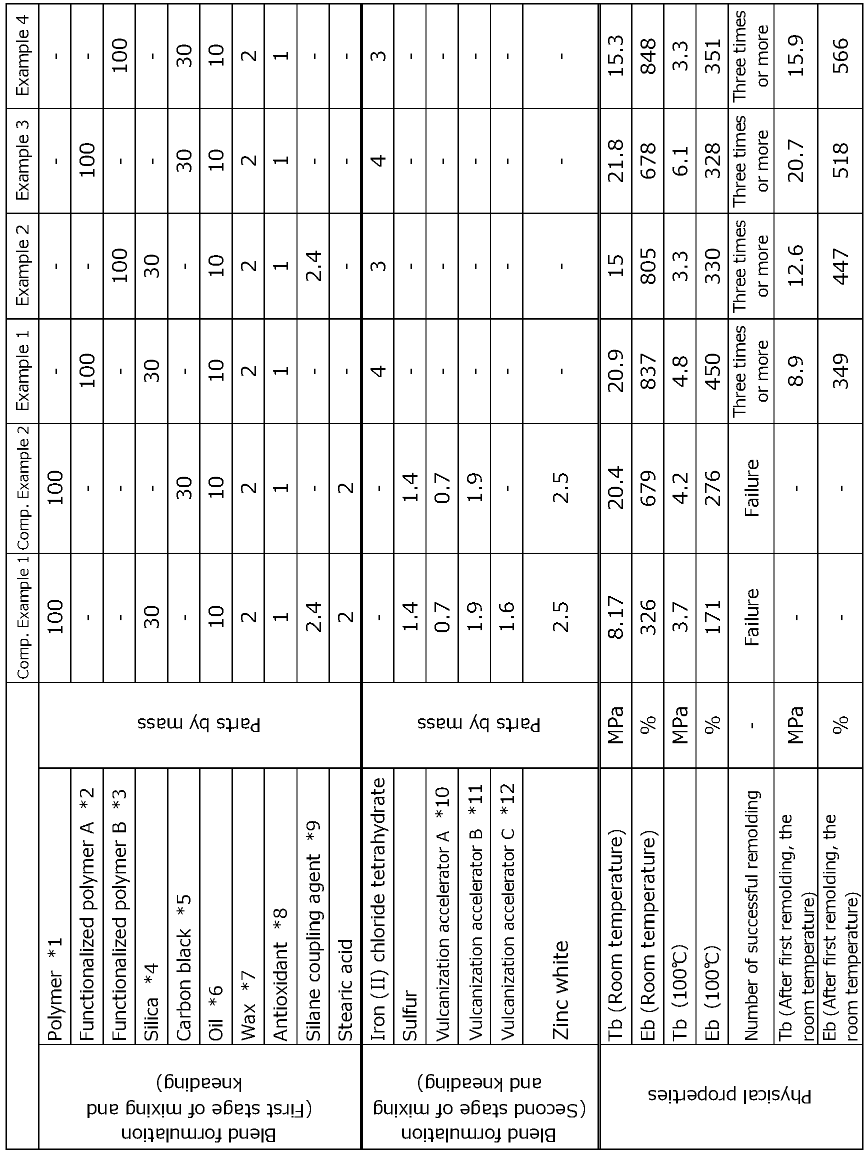

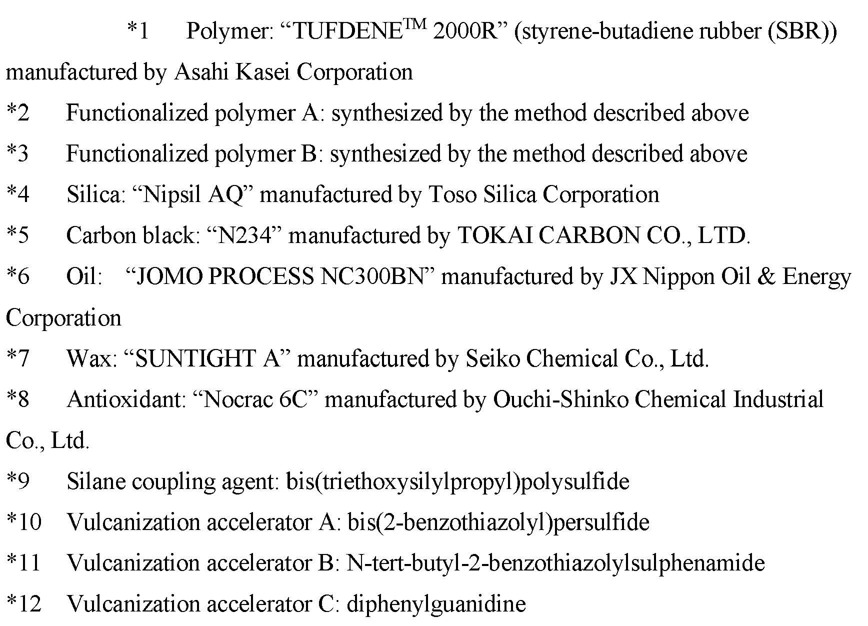

It is understood from Table 1 that the rubber compositions of Examples according to the present disclosure possess physical properties (tensile properties) equivalent to those of the rubber compositions of Comparative Examples utilizing sulfur crosslinking. In particular, the rubber compositions of Examples according to the present disclosure possess physical properties (tensile properties) at high temperature (100 °C) equivalent to those of the rubber compositions of Comparative Examples utilizing sulfur crosslinking.

Further, it is understood from Table 1 that the rubber compositions of Examples according to the present disclosure can be remolded, i.e., recyclable, and perform in terms of physical properties as equally well as a new product after being remolded (recycled).

### INDUSTRIAL APPLICABILITY

The complex polymer and the rubber composition of the present disclosure are applicable to various types of rubber products such as a tire.

## Claims

1. A complex polymer, comprising: a polymer main chain containing a conjugated diene unit and/or an olefin unit; and a functional group bonded to the polymer main chain, wherein:
the functional group contains nitrogen atom and/or phosphorus atom therein and is complexed with a metal ion of an element of group 7-10 in the Periodic Table; and
the bond dissociation energy for dissociation of the metal ion and the functional group is 200 kJ/mol or more.

2. The complex polymer of claim 1, wherein the metal ion and the functional group are bonded to each other by a coordinate bond.

3. The complex polymer of claim 1 or 2, wherein the functional group is derived from a compound containing a triazine ring or a tetrazine ring.

4. The complex polymer of claim 3, wherein a pyridyl/pyrimidinyl group is bonded to the triazine/tetrazine ring.

5. The complex polymer of claim 4, wherein two pyridyl/pyrimidinyl groups are bonded to the triazine/tetrazine ring.

6. The complex polymer of any of claims 3 to 5, wherein the functional group is derived from a compound represented by general formula (1) shown below, 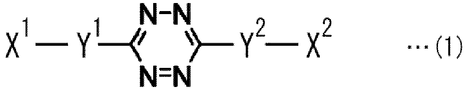 in the general formula (1), each of X¹ and X² independently represents a pyridyl/pyrimidinyl group, and each of Y¹ and Y² independently represents a single bond or a divalent hydrocarbon group.

7. The complex polymer of claim 6, wherein each of X¹ and X² is a pyridyl group and each of Y¹ and Y² is a single bond in the general formula (1).

8. The complex polymer of any of claims 1 to 7, wherein the metal ion is a metal ion of an element of group 8 in the Periodic Table.

9. The complex polymer of claim 8, wherein the metal ion is iron ion.

10. The complex polymer of any of claims 1 to 9, wherein the metal ion is complexed with the polymer main chain having the functional group bonded thereto, by addition of a metal salt to said polymer main chain.

11. The complex polymer of claim 10, wherein the metal salt is a metal halide.

12. The complex polymer of claim 11, wherein the metal salt is a metal chloride.

13. The complex polymer of any of claims 1 to 12, wherein the functional group is bonded to the polymer main chain by an amount of the functional group in the range of 0.1 to 10 mol % with respect to the monomer units of the polymer main chain.

14. A rubber composition containing the complex polymer of any of claims 1 to 13, wherein a content of sulfur in the rubber composition is equal to or less than 0.3 parts by mass with respect to 100 parts by mass of a rubber component.

15. A rubber composition containing the complex polymer of any of claims 1 to 13, wherein a content of peroxide in the rubber composition is equal to or less than 0.3 parts by mass with respect to 100 parts by mass of a rubber component.

16. A method for manufacturing a rubber composition containing the complex polymer of any of claims 1 to 13, the method comprising:
at a first stage of mixing and kneading, mixing and kneading a compound containing a polymer main chain and a compound containing a functional group, thereby forming a functionalized polymer in which the functional group is bonded to the polymer main chain; and
at a second stage of mixing and kneading or thereafter, adding a salt of metal to the functionalized polymer, mixing and kneading the functionalized polymer and the salt of metal, thereby causing the functionalized polymer to be complexed with the metal and thus forming a complex polymer.

17. A method for manufacturing a rubber composition containing the complex polymer of any of claims 1 to 13, the method comprising:
preparing the complex polymer in advance; and
blending the complex polymer thus prepared in advance, with other components of the rubber composition, and mixing and kneading the mixture.

18. A rubber product, containing the rubber composition of claim 14 or 15.

19. A tire, as the rubber product of claim 18.
